(19) Europäisches Patentamt
European Patent Office
Office européen des brevets

(11) **EP 0 777 317 A1**

(12) **EUROPÄISCHE PATENTANMELDUNG**

(43) Veröffentlichungstag:
04.06.1997 Patentblatt 1997/23

(51) Int. Cl.$^6$: **H02P 7/44**, H02K 21/38

(21) Anmeldenummer: 96116971.1

(22) Anmeldetag: 23.10.1996

(84) Benannte Vertragsstaaten:
DE FR GB IT

(30) Priorität: 28.11.1995 DE 19544307
28.11.1995 DE 19544309

(71) Anmelder: Voith Turbo GmbH & Co. KG
89522 Heidenheim (DE)

(72) Erfinder:
• Fehringer, Rudolf
1010 Wien (AT)
• Wurz, Johann
2232 Deutsch Wagram (AT)

(74) Vertreter: Weitzel, Wolfgang, Dr.-Ing.
Patentanwalt
Friedenstrasse 10
89522 Heidenheim (DE)

(54) **Schaltungsanordnung zur Speisung einer zweiphasigen elektrischen Maschine**

(57) Die Erfindung betrifft eine Transversalflußmaschine, deren Stator eine Wicklung mit einer ersten Phase ($N_a$) und einer zweiten Phase ($N_b$) aufweist.

Die Erfindung ist dadurch gekennzeichnet, daß die Wicklung der ersten Phase ($N_a$)und die Wicklung der zweiten Phase ($N_b$) in je zwei Teilwicklungen ($N_a(1)$, $N_a(2)$; $N_b(1)$, $N_b(2)$) unterteilt sind und die erste Teilwicklung der ersten Phase ($N_a(1)$) mit der zweiten Teilwicklung der zweiten Phase ($N_b(2)$) und die zweite Teilwicklung der ersten Phase ($N_a(2)$) mit der ersten Teilwicklung der zweiten Phase ($N_b(1)$) in Reihe geschaltet ist.

Fig.1

EP 0 777 317 A1

# Beschreibung

Die Erfindung betrifft eine Schaltungsanordnung zur Speisung einer elektrischen Maschine gemäß dem Oberbegriff des Anspruches 1 sowie eine Schaltungsanordnung gemäß Fig. 5.

Transversalflußmaschinen (TFM) wie sie beispielsweise aus der DE 35 36 538 bekanntgeworden sind, sind spezielle elektrische Maschinen, die in ihrer Grundform einphasige Energiewandler darstellen. Die Hauptkomponenten einer solchen Transversalflußmaschine sind der stillstehende Ständer und ein darin drehbar angeordneter Läufer. Die für einen gewünschten Betriebspunkt der Transversalflußmaschine notwendige elektrische Energie kann auf verschiedene Art und Weise beispielsweise einem Wechselrichter derart aufbereitet werden, daß eine Spannung variabler Amplitude, Frequenz- und Phasenlage an die Maschinenklemmen gelegt wird. Die Transversalflußmaschine erzeugt dann ein Drehmoment, das in erster Näherung sinusförmig zwischen einem Maximalwert und Null periodisch mit dem elektrischen Drehwinkel schwingt. Maschinen mit einem derartigen Verhalten können weder selbständig anlaufen noch sind sie für den Einsatz als Antriebsaggregate geeignet. Gemäß der DE 37 05 089 können zwei Transversalflußgrundmaschinen mechanisch miteinander gekoppelt und so zu einer zweiphasigen elektrischen Maschine kombiniert werden. Diese Maschinen werden so geregelt, daß im Zusammenwirken beider Maschinenteile ein von der Winkellage des Rotors unabhängiges mechanisches Drehmoment erzeugt wird. Ein derartiger aus zwei gleichartigen Teilmaschinen (elektrischen Phasen) aufgebauter Motor bildet für eine Vielzahl von Anwendungsfällen ein wirtschaftliches Optimum bezüglich Bauraum, Gewicht und Kosten. So ist beispielsweise die Verwendung einer zweiphasigen Transversalflußmaschine als elektrischer Einzelradantrieb für Citybusse der Zukunft vorgesehen (siehe auch "Elektrischer Einzelradantrieb für Citybusse der Zukunft", in: Der Nahverkehr 6-1994, Alba-Fachverlag, Düsseldorf).

Der zur Energieversorgung einer der beiden Motorphasen notwendige Wechselrichter-Leistungsteil, wie er aus der DE 37 05 089 bekanntgeworden ist, ist derart aufgebaut, daß zwischen den Potentialschienen eines Konstantspannungs-Zwischenkreises zwei schaltbare Gleichrichterhalbbrücken angeordnet sind und die Motorwicklungen an den Wechselspannungsanschlüssen der Gleichrichterhalbbrücken angeschlossen sind.

Nachteilig an dieser Anspeisung speziell einer zweiphasigen Transversalflußmaschine gemäß dem Stand der Technik ist, daß hierfür immer vier Wechselrichterhalbbrücken erforderlich sind.

Weiterer Nachteil ist, daß Spezialkabel verwendet werden müssen.

Aufgabe der Erfindung ist es eine zweiphasige Transversalflußmaschine zur Verfügung zu stellen, die über drei Wechselrichterhalbbrücken gespeist werden kann, sowie eine Schaltungsanordnung zur Speisung einer zweiphasigen elektrischen Maschine.

Erfindungsgemäß wird diese Aufgabe durch die Merkmale des Anspruches 1 und 5 gelöst.

Die dreiphasige Anspeisung einer Transversalflußmaschine überwindet nicht nur die oben geschilderten Nachteile des Standes der Technik sondern hat darüber hinaus noch weitere Vorteile. So kann durch die dreiphasige Anspeisung eine bestimmte Leistung über drei anstatt wie bisher über vier Zweige geschickt werden. Auf diese Art und Weise werden die Ventile des Wechselrichters besser ausgenutzt und eine kompakte Bauweise ermöglicht.

Des weiteren kann gegenüber der bisherigen Anspeisung einer Transversalflußmaschine vorteilhafterweise bei gleicher anliegender Klemmspannung bei einer dreiphasigen Anspeisung ein größerer Drehzahlbereich ausgenutzt werden.

Vorteilhafte Weiterbildungen der Erfindung sind Gegenstand der Unteransprüche.

Die Erfindung wird nachfolgend anhand von Ausführungsbeispielen ohne Beschränkung der Allgemeinheit beschrieben.

Es zeigt:

Fig. 1    eine zweiphasige Transversalflußmaschine mit einer Wicklungsanordnung für eine dreiphasige Anspeisung.

Fig. 2    die Schaltungsanordnung zur Speisung einer zweiphasigen elektrischen Maschine mittels eines dreiphasigen Umrichterleistungsteils.

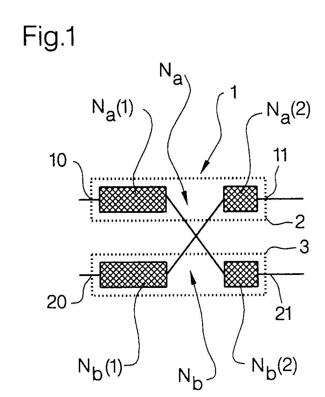

Figur 1 zeigt ein Prinzipschaltbild der erfindungsgemäßen Transversalflußmaschine 1. Transversalflußmaschinen umfassen als wesentliche Baugruppen einen Stator sowie einen dazugehörigen Rotor, die eine Maschinenphase bilden (s.a. DE 35 36 538 bzw. DE 37 05 089).

Die Bezeichnung Transversalflußmaschine resultiert aus der speziellen Art der Führung des magnetischen Flusses. Bei konventionellen Maschinen mit longitudinalem Magnetkreis wird der magnetische Fluß aus dem Luftspalt über den Statorzahn und das Joch dem im Umfangsrichtung benachbarten Pol zugeführt; der Fluß wird zwischen zwei Polen in Umfangsrichtung geführt, also in Richtung der Bewegung des Rotors. In der transversalen Anordnung wird dagegen der magnetische Fluß um 90° gedreht und in einer Ebene quer (transversal) zur Bewegungsrichtung zum axial zugehörigen Pol geführt. Der Rotor besteht aus einem oder mehreren Ringen von in Umfangsrichtung alternierend magnetisierten Permanentmagneten mit dazwischenliegenden Weicheisenelementen. Die Statorbaugruppe einer Phase trägt U-förmige, geblechte Weicheisenelemente, in deren Aussparung eine Ringwicklung liegt. Das vereinfachte Ersatzschaltbild einer solchen Phase besteht aus einer Wechselspannungsquelle mit eingeprägter sinusförmiger Spannung und der Hauptinduktivität.

Mehrphasige Maschinen, wie sie aus der DE 35 36 538 und DE 37 05 089 bekanntgeworden sind, und deren Offenbarungsgehalt in diese Anmeldung voll umfänglich mit aufgenommen werden soll, erhält man auf einfache Art und Weise durch mechanische Zusammenschaltung der zuvor in Kürze beschriebenen Einphasenmodule.

Als besonders vorteilhaft für verschiedene Anwendungsgebiete haben sich zweiphasige Transversalflußmaschinen wie die im Prinzipschaltbild in Figur 1 dargestellte herausgestellt.

Diese setzen sich aus zwei mechanisch nebeneinander angeordneten Phasen, einer ersten Phase $N_a(2)$ und einer zweiten Phase $N_a(3)$, zusammen. Die Wicklung der Statorbaugruppe jeder Phase $N_a$, $N_b$ ist in vorliegendem Fall in je zwei Teilwicklungen aufgespaltet, eine erste Teilwicklung $N_a(1)$ der ersten Phase $N_a$ und eine zweite Teilwicklung $N_a(2)$ der ersten Phase $N_a$ sowie eine erste Teilwicklung $N_b(2)$ der zweiten Phase $N_b$ und eine zweite Teilwicklung $N_b(2)$ der zweiten Phase $N_b$. Wie der Figur zu entnehmen, kann die zweiphasige Transversalflußmaschine vorzugsweise vier Außenanschlüsse 10, 11, 20, 21 umfassen. Bei der erfindungsgemäßen zweiphasigen Transversalflußmaschine ist die erste Teilwicklung der ersten Phase mit der zweiten Teilwicklung der zweiten Phase und die erste Teilwicklung der zweiten Phase mit der zweiten Teilwicklung der ersten Phase in Reihe geschaltet. Besonders bevorzugt ist eine Aufspaltung der Wicklung der beiden Phasen in Teilwicklungen in einer derartigen Art und Weise, daß die vier Außenanschlüsse 10, 11, 20, 21 an einen dreiphasigen Umrichter angeschlossen werden können, wobei ein symmetrisches Dreiphasensystem in ein Zweiphasensystem transformiert wird.

Eine dreiphasige Speisung der erfindungsgemäßen Transversalflußmaschine ist beispielsweise dann möglich, wenn die Außenanschlüsse 10 und 20 auf gemeinsames Potential gelegt werden. In einer verschlechterten alternativen Ausführungsform hierzu können auch die Außenanschlüsse 11 und 21 auf gemeinsames Potential gelegt werden.

Als besonders bevorzugt hat sich folgende Windungszahl der Teilwicklungen in Abhängigkeit von der Gesamtwindungszahl für den Fall einer dreiphasigen Speisung der erfindungsgemäßen zweiphasigen Transversalflußmaschine herausgestellt:

Für die erste Teilwicklung der Phasen:

$$W_a(1) = W_a \cos (15°)$$

$$W_b(1) = W_b \cos (15°)$$

und für die zweite Teilwicklung der Phasen:

$$W_a(2) = W_a \sin (15°)$$

$$W_b(2) = W_b \sin (15°)$$

Hierbei ist $W_a$, $W_b$ die für die gewünschte Durchflutung notwendige Gesamtwindungszahl, und $W_a(1)$, $W_a(2)$, $W_b(1)$, $W_b(2)$ sind die Windungszahlen der Teilwicklungen.

Besonders bevorzugt ist eine symmetrische Auslegung der Transversalflußmaschine, bei der die Gesamtwindungszahl der beiden Phasen der Maschinen gleich groß ist, was zur Folge hat, daß auch die Teilwindungszahlen der beiden Phasen übereinstimmen. Eine solche Maschine weist einen besonders ausgeglichenen Lauf auf.

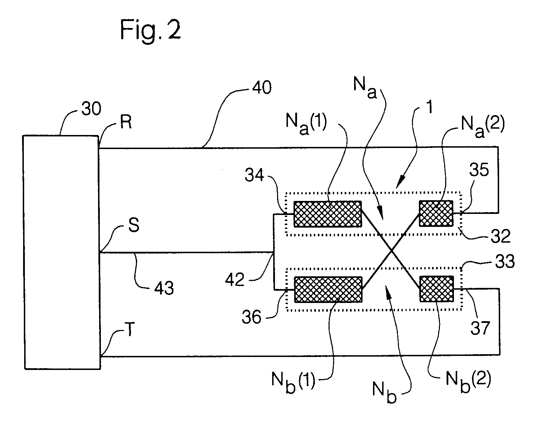

In der Figur 2 ist die Schaltungsanordnung zur Speisung einer zweiphasigen elektrischen Maschine, im vorliegenden Fall einer Transversalflußmaschine 1, durch Anschaltung an ein dreiphasiges Umrichterleistungsteil 30 dargestellt. Transversalflußmaschinen sind elektrische Maschinen mit einer speziellen Art der Führung des magnetischen Flusses, wie zuvor beschrieben.

Bei dem Umrichterleistungsteil handelt es sich um einen Wechselrichter herkömmlicher Bauart, wie er bei der Speisung von üblichen Dreiphasenwechselstrommaschinen Verwendung findet. Solche Dreiphasenwechselrichter, die in großer Stückzahl kostengünstig gefertigt werden, sind aus einer Vielzahl von Schriften, beispielsweise aus dem Lehrbuch "Leistungselektronik, Technische Elektronik, Band 2" von Prof. Dr. Ing. Klaus Bystron, Karl Hanser-Verlag München, Wien, 1979 bekannt.

Die in Fig. 2 dargestellte zweiphasige Transversalflußmaschine gemäß Fig. 1 umfasst eine erste Phase 32 und eine zweite Phase 33 sowie vier Außenanschlüsse 34, 35, 36, 37. Diese Anschlüsse der Transversalflußmaschine 1 sind wie folgt an die drei Anschlüsse R, S, T des Standardumrichterleistungsteils angeschlossen:

Anschluß 35 der ersten Phase ist mit Anschluß R des Umrichters über eine Leitung 40 verbunden. Der Anschluß 37 der zweiten Phase ist über Leitung 41 an Anschluß T des Umrichters 30 angeschaltet. Die Anschlüsse 34 und 36 der ersten und der zweiten Phase werden im Punkt 42 auf gemeinsames Potential gelegt und über Leitung 43 mit Anschluß S des Dreiphasenumrichters 30 verbunden.

Besonders bevorzugt ist eine Ausführungsform, bei der die Anschlüsse 34 und 36 nicht als Außenanschlüsse der Transversalflußmaschine ausgeführt sind, sondern als Festverdrahtung der Anschlüsse 34 und 36 auf einen gemeinsamen Außenanschluß 42.

Selbstverständlich ist es auch möglich, in einer gegenüber der zuvor dargestellten etwas verschlechterten Ausführungsform den Anschluß 35 und 36 der TFM auf gemeinsames Potential zu legen und an den Anschluß S des Dreiphasenumrichters anzuschalten. In diesem Fall muß aber Anschluß 34 mit dem Anschluß R und Anschluß 36 mit dem Anschluß T des Dreiphasenumrichters verbunden werden.

Ein besonderer Vorteil der Speisung eines zweiphasigen Wicklungssystems durch ein dreiphasiges Standardumrichterleistungsteil ist auch darin zu sehen, daß Standarddrehstromkabel mit der hinlänglich bekannten Belegung der einzelnen Leitungen verwendet werden können.

Die zweiphasige Transversalflußmaschine 1 selbst ist bei dreiphasiger Speisung derart ausgelegt, daß jede Wicklung einer Phase $N_a$, $N_b$ in zwei Teilwicklungen $N_a(1)$, $N_a(2)$ sowie $N_b(1)$ und $N_b(2)$ aufgeteilt ist. Erfindungsgemäß erfolgt die Verschaltung der Teilwicklungen der unterschiedlichen Phasen der zweiphasigen Transversalflußmaschine bei Anschaltung an einen dreiphasigen Leistungsumrichter wie folgt:

Die erste Teilwicklung $N_a(1)$ der ersten Phase $N_a$ wird mit der zweiten Teilwicklung $N_b(2)$ der zweiten Phase $N_b$ in Reihe geschaltet und die erste Teilwicklung $N_b(1)$ der zweiten Phase $N_b$ wird mit der zweiten Teilwicklung $N_a(2)$ der ersten Phase $N_a$ in Reihe geschaltet.

Unter den Randbedingungen eines möglichst gleichbleibenden Drehmomentverlaufes über der Zeit bei einer zweiphasigen Transversalflußmaschine, die eine Verschiebung der Durchflutung von 90° der einzelnen Phasen zueinander erfordert (s.a. Elektrischer Einzelradantrieb für Citybusse der Zukunft a.a.O.), und für den Fall eines symmetrischen Dreiphasensystems mit gleich großen Strangströmen (siehe auch Dubbel, Taschenbuch für den Maschinenbau, Seiten V8 bis V9, Springer-Verlag, Berlin 1995) hat sich gezeigt, daß bei vorgegebener Gesamtwindungszahl zur Erreichung einer gewünschten Durchflutung die folgenden Teilwindungszahlen zu einem optimalen Betriebsverhalten führen:.

Windungszahl der ersten Teilwicklung der ersten Phase: $W_a(1) = W_a \cos(15°)$
Windungszahl der zweiten Teilwicklung der ersten Phase: $W_a(2) = W_a \sin(15°)$
Windungszahl der ersten Teilwicklung der zweiten Phase: $W_b(1) = W_b \cos(15°)$
Windungszahl der zweiten Teilwicklung der zweiten Phase: $W_b(2) = W_b \sin(15°)$

Bevorzugt sind die Gesamtwindungszahlen der ersten und der zweiten Phase gleich groß, es gilt also $W_a = W_b$.

Die vorliegende Erfindung zeigt somit erstmals eine Schaltungsanordnung für eine zweiphasige Transversalflußmaschine, die von einem dreiphasigen Umrichter gespeist wird.

## Patentansprüche

1. Transversalflußmaschine, deren Stator eine Wicklung mit einer ersten Phase ($N_a$) und einer zweiten Phase ($N_b$) aufweist, dadurch gekennzeichnet, daß die Wicklung der ersten Phase ($N_a$) und die Wicklung der zweiten Phase ($N_b$) in je zwei Teilwicklungen ($N_a(1)$, $N_a(2)$; $N_b(1)$, $N_b(2)$) unterteilt sind und die erste Teilwicklung der ersten Phase ($N_a(1)$) mit der zweiten Teilwicklung der zweiten Phase ($N_b(2)$) und die zweite Teilwicklung der ersten Phase ($N_a(2)$) mit der ersten Teilwicklung der zweiten Phase ($N_b(1)$) in Reihe geschaltet ist.

2. Transversalflußmaschine nach Anspruch 1, dadurch gekennzeichnet, daß die beiden Teilwicklungen ( $N_a(1)$, $N_a(2)$; $N_b(1)$, $N_b(2)$ ) einer Phase ($N_a$;$N_b$) eine unterschiedliche Windungszahl aufweisen.

3. Transversalflußmaschine nach Anspruch 1 oder 2, dadurch gekennzeichnet, daß die Windungszahl ($W_a(1)$ ) der ersten Teilwicklung ($N_a(1)$ ) der ersten Phase ($N_a$) und die Windungszahl ($W_b(1)$ ) der ersten Teilwicklung ($N_b(1)$ ) der zweiten Phase ($N_b$) und
die Windungszahl ($W_a(2)$ ) der zweiten Teilwicklung ($N_a(2)$ ) der ersten Phase ($N_a$) und die Windungszahl ($W_b(2)$ ) der zweiten Teilwicklung ($N_b(2)$ )der zweiten Phase ($N_b$) gleich sind.

4. Transversalflußmaschine nach einem der Ansprüche 1 bis 3, dadurch gekennzeichnet, daß die Windungszahl ($W_a(1)$; $W_b(1)$ )der ersten Teilwicklung ($N_a(1)$; $N_b(1)$ ) einer Phase ($N_a$; $N_b$)
die Gesamtwindungszahl dieser Phase * cos (15°) und die Windungszahl der zweiten Teilwicklung ($N_a(2)$; $N_b(2)$ ) einer Phase ($N_a$; $N_b$)
die Gesamtwindungszahl dieser Phase * sin (15°) ist.

5. Schaltungsanordnung zur Speisung einer zweiphasigen elektrischen Maschine, wobei die zweiphasige elektrische Maschine (1) an ein dreiphasiges Umrichterleistungsteil (30) angeschaltet ist, deren Phasenwicklungen mit ihrem einen Anschluß jeweils an einen Phasenanschluß, und mit ihrem anderen Anschluß gemeinsam an den dritten Phasenanschluß eines dreiphasigen Umrichterleistungsteils (30) angeschaltet ist,
dadurch gekennzeichnet, daß
jede Wicklung der beiden Phasen ($N_a$, $N_b$) der elektrischen Maschine in je zwei Teilwicklungen unterteilt ist, und
die erste Teilwicklung der ersten Phase ($N_a(1)$) mit der zweiten Teilwicklung der zweiten Phase ($N_b(2)$) der elektrischen Maschine und die zweite Teilwicklung der ersten Phase ($N_a(2)$) mit der ersten Teilwicklung der zweiten Phase ($N_b(1)$) der elektrischen Maschine in Reihe geschaltet ist.

6. Schaltungsanordnung nach Anspruch 5, dadurch gekennzeichnet, daß die Windungszahl der ersten Teilwicklung der ersten Phase ($W_a(1)$) und der ersten Teilwicklung der zweiten Phase ($W_b(1)$) der elektrischen Maschine und
die Windungszahl der zweiten Teilwicklung der ersten Phase ($W_a(2)$) und der zweiten Teilwicklung der zweiten Phase ($W_b(2)$) der elektrischen Maschine gleich sind.

7. Schaltungsanordnung nach Anspruch 5 oder 6, dadurch gekennzeichnet, daß für jede Phase die Windungszahl der ersten Teilwicklung ($W_a(1)$, $W_b(1)$) der elektrischen Maschine die Gesamtwindungszahl der jeweiligen Phase ($W_a$, $W_b$) der elektrischen Maschine * cos (15°) und die Windungszahl der zweiten Teilwicklung ($W_a(2)$, $W_b(2)$) der elektrischen Maschine die Gesamtwindungszahl der jeweiligen Phase ($W_a$, $W_b$) der elektrischen Maschine * sin (15°) ist.

8. Schaltungsanordnung nach Anspruch 7, dadurch gekennzeichnet, daß die Gesamtwindungszahl der ersten Phase ($W_a$) gleich der Gesamtwindungszahl der zweiten Phase ($W_b$) ist.

9. Schaltungsanordnung nach einem der vorangegangenen Ansprüche 5 - 8, dadurch gekennzeichnet, daß die zweiphasige elektrische Maschine eine Transversalflußmaschine ist.

10. Schaltungsanordnung gemäß Anspruch 9, dadurch gekennzeichnet, daß die Transversalflußmaschine ein Transversalflußmotor ist.

11. Schaltungsanordnung gemäß Anspruch 10, dadurch gekennzeichnet, daß die Transversalflußmaschine ein Transversalflußgenerator ist.

Fig.1

Fig. 2

<table>
<tr><td colspan="2">Europäisches Patentamt</td><td>EUROPÄISCHER RECHERCHENBERICHT</td><td colspan="2">Nummer der Anmeldung<br>EP 96 11 6971</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 352 189 A (SHINKO ELECTRIC C.LTD.) 24.Januar 1990 * Spalte 13, Zeile 35 - Zeile 40; Abbildungen 20-22D * --- | 1-3 | H02P7/44 H02K21/38 |
| Y | EP 0 237 778 A (SHINKO ELECTRIC C.LTD.) 23.September 1987 * Spalte 12, Zeile 41 - Zeile 46 * | 1-3 | |
| A | * Spalte 11, Zeile 44-49; Abbildungen 5,6,9 * --- | 5,6,8 | |
| A | DE 40 17 442 A (PROF.DR.-ING. K.WARBINEK) 12.Dezember 1991 * Spalte 3, Zeile 13 - Zeile 31; Abbildung 1 * * Spalte 5, Zeile 25 - Zeile 42; Abbildung 4 * --- | 5 | |
| D,A | DE 37 05 089 A (PROF.DR-ING. H.WEH) 25.August 1988 * Abbildungen 4,6 * --- | 1,5 | RECHERCHIERTE SACHGEBIETE (Int.Cl.6) |
| A | FR 2 452 816 A (ASEA AB) 24.Oktober 1980 * Abbildungen 1,2 * --- | 1,3,5,6,8 | H02K H02P |
| A | EP 0 677 914 A (PR.DR.-ING. H.WEH) 18.Oktober 1995 ----- | | |

Der vorliegende Recherchenbericht wurde für alle Patentansprüche erstellt

| Recherchenort | Abschlußdatum der Recherche | Prüfer |
|---|---|---|
| BERLIN | 6.März 1997 | Leouffre, M |